# EUROPEAN PATENT APPLICATION

(11) **EP 1 918 056 A1**
(43) Date of publication of application: **07.05.2008**
(21) Application number: 06123424.1
(22) Date of filing: 03.11.2006
(51) Int. Cl.: B23K 9/32

(54) **Suction hood for exhausting and cleaning fumes and mist from machining processes**

(71) Applicant: Euromate Industrial Air Cleaning Systems B.V., 1822 BL Alkmaar (NL)
(72) Inventor: Valkering, Jozef Engelbertus Petrus, 1906 CP Limmen (NL)
(74) Representative: Metman, Karel Johannes

(57) **Abstract**

The invention relates to a suction hood for exhausting and cleaning fumes and mist from machining processes, for example welding. It comprises a cover, ducting channel extending at least partly in the cover and having an entrance and an exit. The ducting channel is adapted to communicate with a fan to create a suction flow in the ducting channel from the entrance to the exit. At least a pre-filter is provided within the ducting channel. A connection may connect to a main filter. The pre-filter is arranged behind the entrance, as seen in the direction of flow, and is provided with a labyrinth path to catch sparks and other particles. A pressure drop sensor senses the pressure drop over the pre-filter and a warning signal device is connected to the sensor. A temperature sensor may be used to warn for a fire in the pre-filter in an early stage. The structure of the hood is such that it can be transported in a compact manner and that placing and replacing the pre-filter is easy.

## Description

The present invention relates to a suction hood for exhausting and cleaning fumes and mist from machining processes, comprising a cover, ducting means extending at least partly in the cover and having an entrance and an exit, the ducting means being adapted to communicate with suction means to create a suction flow in the ducting means from the entrance to the exit, at least a pre-filter provided within the ducting means and a connection preferably to a main filter, the pre-filter being arranged behind the entrance, as seen in the direction of flow.

Such suction hood is for example known from US 6,758,875. This document discloses an air cleaning system for a robotic welding chamber. A frame is positioned about the robot and includes a top defining and opening therein. A shield is supported by the frame to define the robot chamber. A spark arrestor is supported on the frame for controlling sparks created by welding. A blower housing having an inlet is disposed immediately above and in direct fluid communication with the opening to move air from the chamber to the blower housing. The frame includes a separate support stand for supporting the blower housing on top of the chamber.

The present invention has the object to provide a welding fume suction hood having novel features.

In a first aspect of the invention, the pre-filter is arranged just behind the entrance, as seen in the direction of flow, which is provided with a labyrinth path to catch sparks and other particles.

This labyrinth path provides a very effective means to catch sparks and oil containing particles, thereby reducing the number of sparks and particles to reach the pre-filter. The pre-filter then remains cleaner for a longer period and the risk of fire ignited by sparks reaching the pre-filter surface which might be covered with flammable, for example oily substances is reduced considerably.

Advantageously, the labyrinth path comprises a baffle plate arranged opposite to the entrance at an angle to divert sparks and other particles in downward direction while the flow path is upwards from the entrance past the baffle plate.

Preferably the ducting means comprises a large volume chamber between the labyrinth path and the pre-filter in order to cause the airflow through the labyrinth path to slow-down due to the entrance of the airflow into the large volume chamber. This speed reduction of the airflow causes any particles still present in the airflow to settle on the bottom of the chamber, thereby disabling the particles to reach the pre-filter, which preferably forms at least a part of the upper side of this large volume chamber.

In order to further decrease the number of sparks entering the ducting means, the entrance of the ducting means comprises one or more slit-shaped openings. Due to the resulting decrease of the area of the entrance, the surroundings of the slit-shaped openings will catch sparks and other particles which are thereby prevented from entering the ducting means.

It is advantageous if the ducting means includes an air chamber behind the at least one pre-filter, a ducting channel being connected to the air chamber and extends mainly through the cover to the connection to the main filter.

Such internal arrangement of the ducting channel within the cover has the advantage that it saves space, while it may also facilitate the assembly.

According to another advantageous aspect of the invention the suction hood includes a pressure drop sensor sensing the pressure drop over the at least one pre-filter, as well as a warning signal device connected to the sensor.

Although it is known to have a sensor in the main filter, it is now proposed to have a sensor for the pre-filter, so that maintenance can be carried out efficiently, while the filter performance can be kept at a high level in an easy way.

Preferably the pre-filter is slidably arranged in the cover and is locked in place by a cover plate removably connected to the remainder of the cover. In this way, it is very easy to place and replace the pre-filter, so that removal for cleaning operations or for replacement is very easy.

In a further aspect of the invention, the cover includes a tray-like top cover part, while the remaining parts of the hood are shaped such that they fit into the top cover part when disassembled.

This structure of the hood enables a very compact packing of the disassembled hood parts thereby facilitating transport of the hood, for example from the manufacturing site to the site of use.

The hood according to the invention can be used as a cover in the roof of a robotic welding chamber or other chamber or space for performing machining operations, but can also be mounted to the roof structure of a building or to a mobile unit which is displaceable on a track. In some cases the hood may have (welding) curtains suspended from its edges to surround the (welding) site.

Further details and advantages will become clear from the following description with reference to the drawings showing an example of a welding fume suction hood according to the invention.
Fig. 1 is perspective view of a welding robot cell having a welding fume suction hood according to the invention placed on top.
Fig. 2 is a top view of the welding fume suction hood of Fig. 1, on a larger scale.
Fig. 3 is a sectional view according to the line III-III in Fig. 2.
Fig. 4 is a side view of the suction hood of Fig. 2.
Fig. 5 is a sectional view according to the line V-V in Fig. 4, on a larger scale.
Fig. 6 shows detail VI in Fig. 5.
Fig. 7 is a perspective view of the welding fume suction hood, illustrating removal of the pre-filter.
Fig. 8 is a perspective exploded view of the suction hood according to the invention.

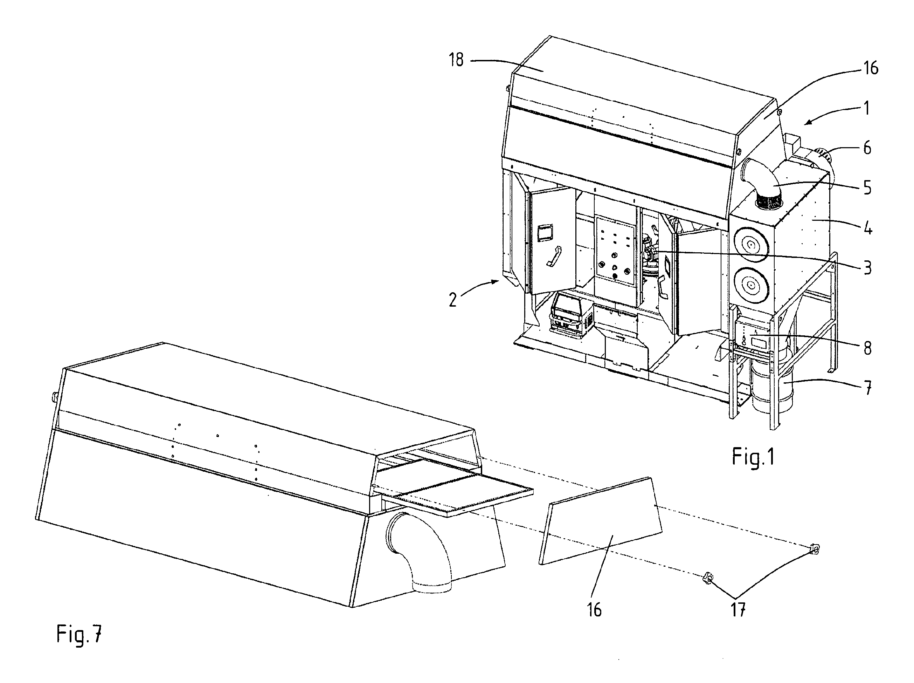

Fig. 1 shows one example of the ways in which the suction hood according to the invention can be used, in this case for exhausting and cleaning welding fumes. Here, the welding hood 1 is placed on top of a robot cell 2 in which one or more welding robots 3 are arranged to automatically weld parts together. Next to the robot cell, there is arranged a main filter unit 4, including one or more filters of known design, for example pleated filters or other types of filters useful in cleaning the fumes from the welding robots 3. The welding fumes arrive in the main filter unit 4 through ducting means to be described later on in further detail. Fig. 1 shows an end part 5 of the ducting means connecting to the main filter unit 4. The filter system also comprises suction means to create an airflow from the robot cell 2 to the main filter unit 4, and in this case the suction means includes an electric motor driven fan or blower 6 communicating with the ducting means. The suction means may be provided in a different way or provided in a different place in the system. It may be integrated in the hood, but it may also be connected to the ducting means of the hood.

Fig. 1 also shows a collecting drum 7 disposed below the filters of the main filter unit 4 for collecting particles which are discharged from the surface of the filters in the main filter unit 4 when they are automatically cleaned by a reverse pulse in the main filter unit 4. A control box 8 provides the means to control the operation of the cleaning system.

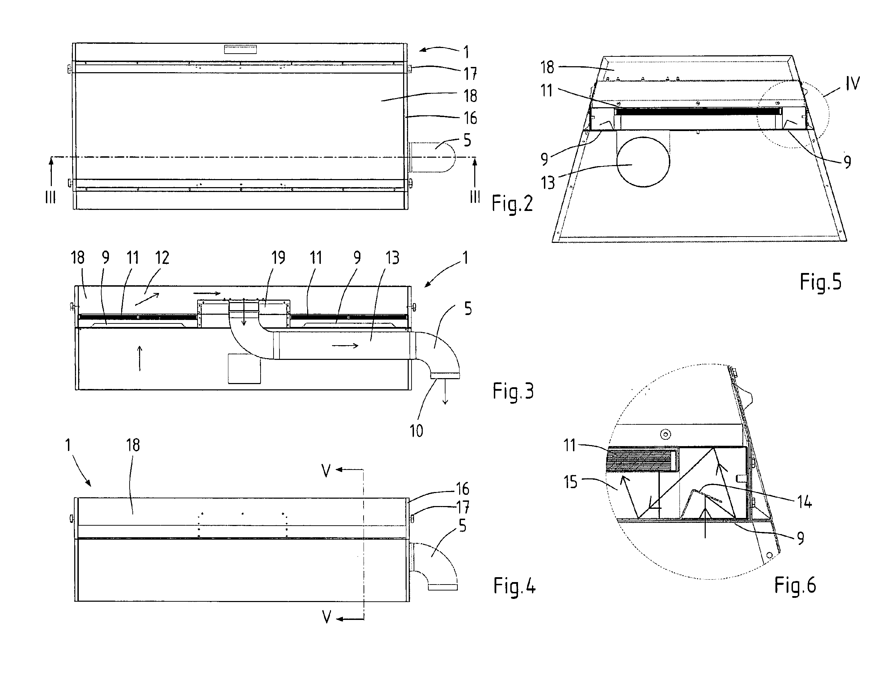

Figs. 2-8 show the construction of the suction hood according to the invention in more detail. Fig. 3 shows the airflow through the ducting means from an entrance 9 in the top of the chamber of the robot cell 2 to an exit 10, here the connection to the main filter unit 4. In the embodiment shown, there are two entrances 9 which may operate simultaneously or one of them may be made ineffective if only one part of the robot cell is used. Within the ducting means, just behind the respective entrances 9, when seen in the direction of flow, there are provided pre-filters 11 having a plate-like design and may be provided with metal filter elements know per se. The pre-filter 11 is used to filter relatively coarse and oil-containing particles which have reached the pre-filter. In the flow direction behind the pre-filters there is provided an air chamber 12 to which a ducting channel 13 connects, extending downwardly to a level below the entrances 9 an then through the interior of the hood towards the end part 5 of the ducting means exterior of the suction hood 1.

Fig. 5 and 6 show the area between the entrance 9 and the pre-filter 11 in more detail. It is shown that the entrance 9 is formed by a slit-like opening having a relatively small cross sectional area compared to the surface area of the lower side of the suction hood. Opposite to the entrance there is arranged a baffle plate 14 positioned at an angle causing particles to be catched and returned in a downward direction, while the flow path is upwardly from the entrance 9 passed the baffle plate 14. The baffle plate creates a labyrinth path causing this airflow to be freed from the main part of the sparks and other particles which are hot and could cause a risk of fire in the pre-filter, the lower surface of which may be covered by flammable substances. Furthermore, in the direction of flow behind the baffle plate 14 there is a relatively large volume chamber causing a reduction in the airflow speed, thereby promoting any particles remaining in the airflow to settle on the bottom of this large volume chamber 15.

In a further aspect of the invention, the suction hood 1 is provided with a sensor (not shown) on both sides of one or each pre-filter 11 in order to sense the pressure drop over the pre-filter(s) 11. When this pressure drop exceeds a predetermined value, a signal is sent to the control box 8 which is provided with a warning signal device. This warning signal device will then cause an audible and/or visible warning signal, to warn personnel that the pre-filter(s) 11 should be cleaned or replaced.

The invention may also include a temperature sensor arranged in the neighbourhood, in particular behind the pre-filter(s) 11, for example at the entrance of the ducting channel 13. The temperature sensor senses the fume temperature coming from the pre-filter. In the rare case that a fire has been ignited in the pre-filter, the temperature of the fumes coming from the pre-filter will increase and this will directly be sensed by the temperature sensor and a signal will be sent to the warning signal device of the control box 8 which will provide an alarm signal in order to enable personnel to extinguish the fire in an initial phase.

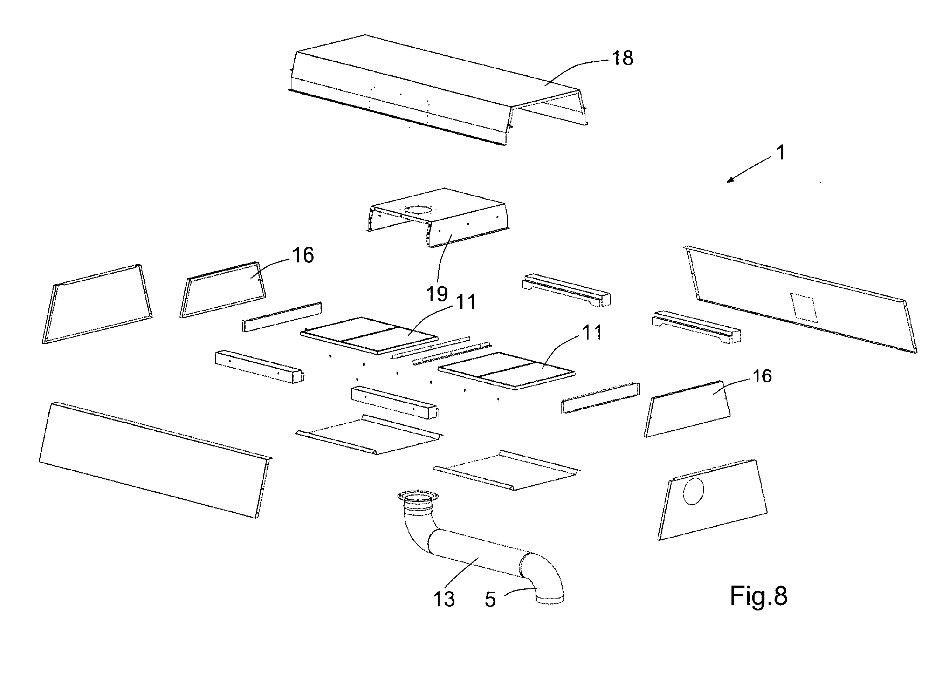

Fig. 7 shows that the pre-filter 11 is slidably arranged in its position in the suction hood and is locked in its position by the cover plate 16 which can be easily placed and replaced by means of mounting knobs 17 or other fastening means allowing easy demounting and mounting of the cover plate 16. This structure makes it very easy to remove the pre-filter for cleaning or replacing purposes.

Fig. 8 shows the parts of the suction hood 1. Suction hood 1 includes a tray-like top cover part 18, while the remaining parts, except for the ducting channel 13 and its suspension member 19, are mainly plate-shaped or generally rod-shaped. The dimensions of these parts are smaller than that of the bottom of the cover part 18 in upside down position. As a result it is possible to place all parts of the hood into the cover part 18 so as to form a compact package which can be transported in a convenient manner.

It will clear from the foregoing that the invention provides a suction hood which has very good and lasting cleaning or filtering properties, and which is safe in use, while it has a structure leading to a compact, user friendly and optically pleasant design.

The invention is not limited to the example shown in the drawings and described hereinbefore which may be varied in different ways within the scope of the invention. For example, the suction hood according to the invention may also be used to exhaust fumes from plasma cutting machines or the like, or oil laden mists from other machining operations. The suction hood will generally be used with one or more main filters but in some situations the main filter may be bypassed or left out, for example if the pre-filtered fumes are clean enough to be discharged to the outside air. The main filter may be placed in any position, and the ducting means may follow a different path, also outwardly of the suction hood, for example the ducting channel may run upwardly from the air chamber and at least partly outside the suction hood, either to a main filter or to an exhaust.

## Claims

1. Suction hood for exhausting and cleaning fumes and mist from machining processes, comprising a cover, ducting means extending at least partly in the cover and having an entrance and an exit, the ducting means being adapted to communicate with suction means to create a suction flow in the ducting means from the entrance to the exit, at least a pre-filter provided within the ducting means and a connection preferably to a main filter, the pre-filter being arranged behind the entrance, as seen in the direction of flow, which is provided with a labyrinth path to catch sparks and other particles.

2. Suction hood according to claim 1, wherein the labyrinth path comprises a baffle plate arranged opposite to the entrance at an angle to divert sparks and other particles in downward direction while the flow path is upwards from the entrance past the baffle plate.

3. Suction hood according to claim 1, wherein the ducting means comprises a large volume area between the labyrinth path and the pre-filter.

4. Suction hood according to one of the preceding claims, wherein the entrance of the ducting means comprises one or more slit-shaped openings.

5. Suction hood preferably according to one of the preceding claims, wherein the ducting means includes an air chamber behind the at least one pre-filter, a ducting channel being connected to the air chamber and extends mainly through the cover to the connection to the main filter.

6. Suction hood preferably according to any one of the preceding claims, including a pressure drop sensor sensing the pressure drop over the at least one pre-filter and a warning signal device connected to the pressure drop sensor.

7. Suction hood according to one of the preceding claims, including a temperature sensor for sensing a temperature increase in the ducting means behind the pre-filter, as seen in the direction of flow, and a warning signal device connected to the temperature sensor.

8. Suction hood preferably according to one of the preceding claims, wherein the pre-filter is slidably arranged into the cover and is locked in place by a cover plate removably connected to the remainder of the cover.

9. Suction hood preferably according to one of the preceding claims, wherein the cover includes a tray like top cover part, while the remaining parts of the hood are shaped such that they fit into the top cover part when disassembled.

10. Wherein the cover is adapted to be mounted on the frame of the welding unit, or adapted to be suspended from a ceiling, or on a mobile carriage.

11. Suction hood for use with a machining unit, comprising a cover, ducting means extending at least partly in the cover and having an entrance and an exit, the ducting means being adapted to communicate with suction means to create a suction flow in the ducting means from the entrance to the exit, at least a pre-filter provided within the ducting means, , a pressure drop sensor sensing the pressure drop over the pre-filter and a warning signal device connected to the sensor.

12. Suction hood for use with a machining unit, comprising a cover, ducting means extending at least partly in the cover and having an entrance and an exit, at least a pre-filter provided within the ducting means, wherein the cover includes a tray like top cover part, while the remaining parts of the hood are shaped such that they fit into the top cover part when disassembled.

13. Suction hood for use with a machining unit, comprising a cover, ducting means extending at least partly in the cover and having an entrance and an exit, and at least a pre-filter provided within the ducting means, wherein the pre-filter is slidably arranged into the cover and is locked in place by a cover plate removably connected to the remainder of the cover.

14. Suction hood for use with a machining unit, comprising a cover, ducting means extending at least partly in the cover and having an entrance and an exit, the ducting means being adapted to communicate with suction means to create a suction flow in the ducting means from the entrance to the exit, at least a pre-filter provided within the ducting means, and a temperature sensor for sensing a temperature increase in the ducting means behind the pre-filter, as seen in the direction of flow.
